# EUROPEAN PATENT APPLICATION

(11) **EP 2 282 370 A1**
(43) Date of publication of application: **09.02.2011**
(21) Application number: 09734862.7
(22) Date of filing: 14.04.2009
(51) Int. Cl.: H01M 8/04, H01M 8/10

(54) **FUEL CELL SYSTEM**

(30) Priority: 25.04.2008 JP 2008115108
(71) Applicant: Toyota Jidosha Kabushiki Kaisha, Toyota-shi, Aichi 471-8571 (JP)
(72) Inventor: SHINODA, Kazunobu, Kariya-shi Aichi 448-8650 (JP); SUZUMURA, Keiji, Kariya-shi Aichi 448-8650 (JP)
(74) Representative: Kuhnen & Wacker
(86) International application number: PCT/JP2009/057480
(87) International publication number: WO 2009/131033

(57) **Abstract**

A fuel cell system is provided which can be maintained easily.

Specifically, there are provided a base section 100 fixed on an installation surface, support members 111, 113 installed on the base section, a partition wall 117 attached on the base section and partitioning the space over the base section, and an outer panel 115 detachably secured to the partition wall and the base section.

## Description

### TECHNOLOGICAL FIELD:

The present invention relates to a fuel cell system.

### BACKGROUND ART:

In a fuel cell system for home use, as described in Patent Document 1 for example, a box-shaped case is fixed on a base installed to be fixed on an installation surface, and a plurality of devices constituting the fuel cell system is received in the case.

In fuel cell systems of this kind, generally, a plurality of devices constituting a fuel cell system and a framework for attaching an outer panel which surrounds the fuel cell system are constructed on a base. The framework is structured so that a plurality of support pillars are provided to be upright at at least four corners on the base and that plate members or angle bars are extended between these support pillars horizontally or in cross fashion. Necessary devices are set inside of the framework, and the outer panel is detachably secured to the outer part of the framework by means of bolts or the like.

### PRIOR ART DOCUMENT:

### PATENT DOCUMENT:

Patent Document 1: JP2005-32462 A

### SUMMARY OF THE INVENTION:

### PROBLEM TO BE SOLVED BY THE INVENTION:

In the fuel cell system described above, the devices are hidden in the inner part of the framework, and this gives rise to a problem that because it becomes difficult to reach the devices easily, on-site works become difficult to do at the time of the devices falling in fault or at the time of inspection thereof.

The present invention has been made for solving the aforementioned problem in the prior art, and an object thereof is to provide a fuel cell system capable of being easy to maintain:

### MEASURES FOR SOLIVING THE PROBLEM

In order to solve the foregoing problem, the feature of the invention according to Claim 1 resides in comprising a base section fixed on an installation surface, a support member attaching a plurality of devices thereto and installed on the base section, a partition wall attached to the base section and partitioning the space over the base section, and an outer panel detachably secured to the partition wall and the base section.

The feature of the invention according to Claim 2 resides in that in Claim 1, the base section is provided with attaching seats for securing a lower part of the outer panel.

The feature of the invention according to Claim 3 resides in that in Claim 1 or 2, the partition wall partitions the interior of the fuel cell system into a support member receiving compartment for receiving the support member and a maintenance-requiring parts receiving compartment for receiving maintenance-requiring parts, and that the outer panel comprises a front panel portion covering a front part of the fuel cell system, a back panel portion covering a back part, a side panel portion covering the maintenance-requiring parts receiving compartment, and a ceiling panel portion covering a ceiling part.

### EFFECTS OF THE INVENTION:

In the invention according to Claim 1, since the system is provided with the base section fixed on the installation surface, the support member attaching the plurality of devices thereto and installed on the base section, the partition wall attached on the base section and partitioning the space over the base section, and the outer panel detachably secured to the partition wall and the base section, it is possible to easily carry out the inspection and the like of the respective devices supported by the support member without being obstructed by a framework on the base section.

In the invention according to Claim 2, since the base section is provided with the attaching seats for securing the lower part of the outer panel, it is possible to easily attach the outer panel by the use of the attaching seats and the partition wall.

In the invention according to Claim 3, since the partition wall partitions the interior of the fuel cell system into the support member receiving compartment for receiving the support member and the maintenance-requiring parts receiving compartment for receiving the maintenance-requiring parts and since the outer panel comprises the front panel portion covering the front part of the fuel cell system, the back panel portion covering the back part, the side panel portion covering the maintenance-requiring parts receiving compartment, and the ceiling panel portion covering the ceiling part, it is possible only by detaching the side panel portion to easily inspect or replace the maintenance-requiring parts received in the maintenance-requiring parts receiving compartment, and it is possible by detaching the front panel portion to easily carry out the inspection or the like of the devices received in the support member receiving compartment.

### BRIEF DESCRIPTION OF THE DRAWINGS:

[Figure 1] is a schematic view showing the outline of a fuel cell system in an embodiment according to the present invention;
[Figure 2] is a plan view of a base section of the fuel cell system.
[Figure 3] is a sectional view taken along the line 3-3 in Figure 2.
[Figure 4] is a view as viewed in the direction of the arrow 4 in Figure 2.
[Figure 5] is a perspective view showing a frame structure of the fuel cell system.
[Figure 6] is an exploded view of an outer panel in a disassembled state of the fuel cell system.
[Figure 7] is an exterior view showing the external appearance of the fuel cell system.
[Figure 8] is a schematic front view showing the arrangement of devices constituting the fuel cell system in which view a front panel portion of the outer panel is removed.
[Figure 9] is a schematic plan view in Figure 8 in which a ceiling panel portion of the outer panel is removed.
[Figure 10] is a schematic side view in Figure 8 in which a side panel portion of the outer panel is removed.

### FORM FOR PRACTICING THE INVENTION:

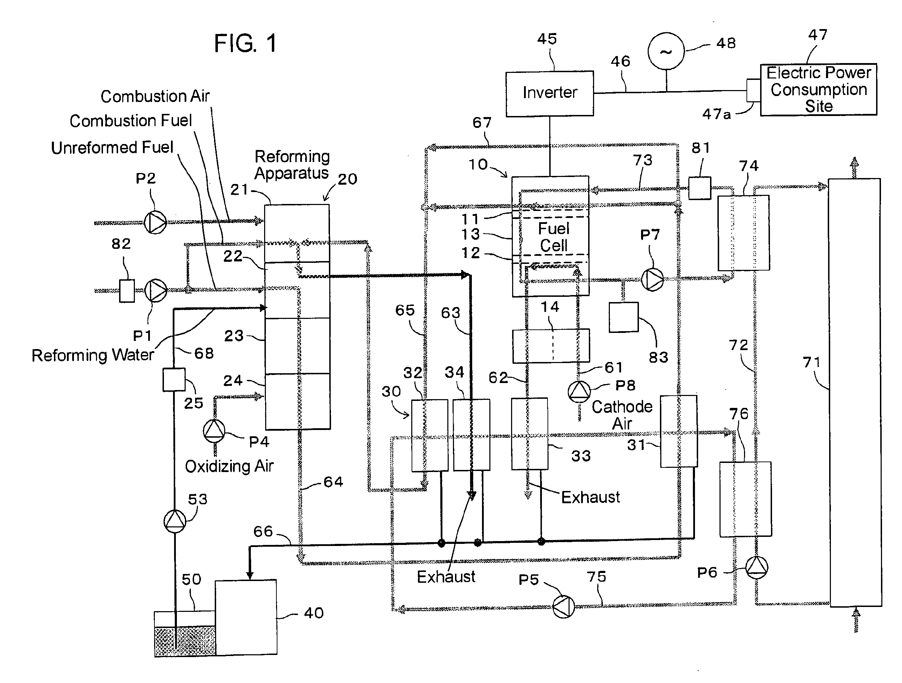

Hereafter, an embodiment of a fuel cell system according to the present invention will be described with reference to the drawings. First of all, the outline of the fuel cell system will be described with reference to Figure 1.

In Figure 1, the fuel cell system is provided with a fuel cell 10 and a reforming apparatus 20 for generating reformed gas (fuel gas) containing hydrogen gas necessary for the fuel cell 10. The fuel cell 10 is provided with a fuel electrode 11, an air electrode 12 being an oxidizer electrode, and electrolyte 13 (a polyelectrolyte membrane in the present embodiment) interposed between both of the electrodes 11, 12 and is operable to generate electric power by using reformed gas supplied to the fuel electrode 11 and air (cathode air) being oxidizer gas supplied to the air electrode 12.

The reforming apparatus 20 is for reforming fuel (unreformed fuel) with steam to supply hydrogen-rich reformed gas to the fuel cell 10 and is composed of a burner (combustion section) 21 being a combustion device, a reforming section 22, a carbon monoxide shift reaction section (hereafter referred to as "CO shift section") 23, and a carbon monoxide selective oxidation reaction section (hereafter referred to as "CO selective oxidizing section") 24. As the fuel, there may be employed natural gas, LPG, kerosene, gasoline, methanol or the like.

The burner (combustion section) 21 is supplied with combustion fuel and burns the combustion fuel to heat the reforming section 22 with combustion gas. That is, the burner 21 generates combustion gas which supplies heat necessary for the steam reforming reaction, by heating the reforming section 22. The combustion fuel is desulfurized by a desulfurizer 82 and is supplied by a combustion fuel pump P1 to the burner 21. The burner 21 burns combustion fuel supplied thereto with combustion air supplied by a combustion air pump P2 during a period from a starting operation to the supply starting of reformed fuel, burns reformed gas supplied directly from the CO selective oxidizing section 24 with combustion air during another period subsequent to the supply starting of reformed fuel to the starting of an ordinary operation, and during the ordinary operation, burns anode offgas (reformed gas supplied to the fuel cell but exhausted without being consumed) supplied from the fuel electrode 11 of the fuel cell 10 with combustion air to lead the combustion gas to the reforming section 22. The deficiency amount of heat in reformed gas or anode offgas is supplemented by combustion fuel. This combustion gas heats the reforming section 22 (so that a catalyzer in the reforming section 22 rises to an active temperature range therefor) and then, is exhausted outside through a combustion gas exhaust pipe 63. It is to be noted that combustible gas includes the aforementioned combustion fuel, reformed gas and anode offgas.

The reforming section 22 reforms a mixture gas in which steam (reforming water) supplied from an evaporator 25 is mixed with the unreformed fuel supplied by the combustion fuel pump P1, through the catalyzer filled in the reforming section 22 to generate hydrogen gas and carbon monoxide gas (a so-called steam reforming reaction). At the same time, the reforming section 22 metamorphoses the carbon monoxide, generated through the steam reforming reaction, and steam into hydrogen gas and carbon dioxide (a so-called carbon monoxide shift reaction). The generated gases (so-called reformed gases) are discharged to the CO shift section 23.

The CO shift section 23 reacts the carbon monoxide and the steam included in the reformed gas through a catalyzer filled inside thereof to metamorphose them into hydrogen gas and carbon dioxide gas. Thus, reformed gas is reduced in the density of carbon monoxide to be led to the CO selective oxidizing section 24.

The CO selective oxidizing section 24 reacts carbon monoxide remaining in the reformed gas and CO oxidation air supplied by a CO oxidizing air pump P4 through a catalyzer filled inside thereof to generate carbon dioxide. Thus, the reformed gas is further reduced in the density of carbon monoxide and is led to the fuel electrode 11 of the fuel cell 10.

The evaporator section 25 is arranged on a part of a reforming water supply pipe 68 one end of which is arranged in a reforming water tank 50 and the other end of which is connected to the reforming section 22. A reforming water pump 53 is provided on the reforming water supply pipe 68. The evaporator section 25 is heated by, e.g., the combustion gas discharged from the burner 21 (or by the waste heats from the reforming section 22, the CO shift section 23 and the like) and thus turns the reforming water fed with a pressure, into steam.

The fuel electrode 11 of the fuel cell 10 is connected at its inlet port to the CO selective oxidizing section 24 through a reformed gas supply pipe 64, and reformed gas is supplied to the fuel electrode 11. The fuel electrode 11 is connected at its outlet port to the burner 21 through an offgas supply pipe 65 and supplies anode offgas discharged from the fuel cell 10 to the burner 21. A bypass pipe 67 which bypasses the fuel cell 10 to make direct connection between the reformed gas supply pipe 64 and the offgas supply pipe 65 is provided between the reformed gas supply pipe 64 and the offgas supply pipe 65.

The air electrode 12 of the fuel cell 10 is connected to an air supply pipe 61 at its inlet port, and air (cathode air) is supplied thereinto by a cathode air supply pump P8. The air electrode 12 of the fuel cell 10 is connected to a cathode offgas exhaust pipe 62 at its outlet port, and the air (cathode offgas) form the air electrode 12 is exhausted outside.

On parts of these air supply pipe 61 and cathode offgas exhaust pipe 62, a humidifier 14 for humidifying the cathode air, supplied to the air electrode 12, by the cathode offgas being oxidizer offgas exhausted from the air electrode 12 is provided to bridge the both pipes 61, 62. The humidifier 14 is of the steam exchange type that humidifies the oxidizer gas by performing steam exchange between the cathode offgas being humidifying medium exhausted from the air electrode 12 and the cathode air being oxidizer gas, and supplies the steam in the cathode offgas exhaust pipe 62, that is, the steam in the gas exhausted form the air electrode 12 into the air supply pipe 61, that is, in the air supplied to the air electrode 12 to humidify the air.

Further, the reformed gas supply pipe 64, the offgas supply pipe 65, the cathode offgas exhaust pipe 62 and the combustion gas exhaust pipe 63 are respectively provided on the parts thereof with a reformed gas condenser 31, an anode offgas condenser 32, a cathode offgas condenser 33 and a combustion gas condenser 34. Although depicted separately in the figure, the condensers 31-33 of these condensers constitute a condenser 30 which constitutes one body structure in which they are connected bodily, as being waste heat collecting means.

The reformed gas condenser 31 condenses the steam in the reformed gas which flows through the reformed gas supply pipe 64 to be supplied to the fuel electrode 11 of the fuel cell 10. The anode offgas condenser 32 is provided on a part of the offgas supply pipe 65 which connects the fuel electrode 11 of the fuel cell 10 to the burner 21 of the reforming apparatus 20 and condenses the steam in the anode offgas which is discharged from the fuel electrode 11 of the fuel cell 11 to flow through the offgas supply pipe 65. The cathode offgas condenser 33 is provided on the cathode offgas exhaust pipe 62 and condenses the steam in the cathode offgas which is exhausted from the air electrode 12 of the fuel cell 10 to flow through the cathode offgas exhaust pipe 62. The combustion gas condenser 34 is provided on the combustion gas exhaust pipe 63 and condenses the steam in the combustion exhaust gas which is exhausted from the reforming section 22 to flow through the combustion gas exhaust pipe 63. In these condensers 31-34, the condensing medium carries out heat exchanges with the respective gases which circulate through the respective condensers 31-34 and rises in temperature as a result of collecting the sensible heats and the latent heats of the respective gases.

The condensers 31-34 communicate with a water refiner 40 through a pipe 66, and condensed water condensed by the respective condensers 31-34 is led to the water refiner 40 to be collected thereby. The water refiner 40 turns the condensed water supplied from the condensers 31-34, that is, the collected water into pure water through an ion exchange resin built therein and leads the purified, collected water to the reforming water tank 50. The reforming water tank 50 temporarily stores the collected water led from the water refiner 40 as reforming water. Further, the water refiner 40 is connected to a pipe for leading replenished water (tap water) supplied from a tap water supply (e.g., a water pipe) and is supplied with tap water when the quantity of the reserved water in the water refiner 40 goes down a lower limit water level.

Further, the fuel cell system is provided with a reserved hot water tank 71 for storing reserved hot water, a reserved hot water circulation circuit 72 for circulating the reserved hot water, an FC cooling water circulation circuit 73 for circulating FC cooling water exchangeable in heat with the fuel cell 10, a first heat exchanger 74 for performing heat exchange between the reserved hot water and a fuel cell heat medium, a condensing refrigerant circulation circuit 75 for circulating a heat medium (condensing refrigerant) being liquid including the water which has collected at least the waste heat discharged from the full cell 10 and/or the waste heat generated in the reforming apparatus 20, and a second heat exchanger 76 for performing heat exchange between the reserved hot water and the condensing refrigerant.

Thus, the waste heat (thermal energy) generated by the power generation of the fuel cell 10 is collected by the FC cooling water and is then collected by the reserved hot water through the first heat exchanger 74, whereby the reserved hot water is heated (rises in temperature). Further, the waste heat (thermal energy) of the offgases (anode offgas and cathode offgas) exhausted from the fuel cell 10 and the waste heat (thermal energy) generated in the reforming apparatus 20 are collected by the condensing refrigerant through the condensers 31-34 and is then collected by the reserved hot water through the second heat exchanger 76, whereby the reserved hot water is heated (rises in temperature). The waste heat generated in the reforming apparatus 20 includes the waste heat of reformed gas, the waste heat of combustion exhaust gas form the burner 21 and the waste heat (waste heat of the reforming apparatus per se) for which heat exchange is performed with the reforming apparatus 20. "FC" in the present description and the accompanying drawings is noted as the abbreviation for "fuel cell".

The reserved hot water tank 71 is provided with one pillar-like container, in which hot water is stored in a layered structure, that is, in such a form that the temperature is the highest on the top portion, becomes lower as the layer goes down and is the lowest at the bottom portion. Water (low temperature water) such as tap water or the like is replenished to the bottom of the pillar-like container of the reserved hot water tank 71, while the high temperature hot water stored in the reserved hot water tank 71 is led out from the top of the pillar-like container of the reserved hot water tank 71. The reserved hot water tank 71 is of a sealed type, so that it is of the type that the tap water pressure acts inside and hence, on the reserved hot water circulation circuit 72 as it is.

A reserved hot water circulating pump P6 is for drawing the reserved hot water at the bottom of the reserved hot water tank 71 to discharge the reserved hot water toward the top of the reserved hot water tank 71 by way of the reserved hot water circulation circuit 72. Thus, the reserved hot water from the reserved hot water tank 71 flows through the second heat exchanger 76 and the first heat exchanger 74 and is subjected to heat exchange with the condensing refrigerant at the second heat exchanger 76 and further to heat exchange with the FC cooling water at the first heat exchanger 74.

The FC cooling water circulation circuit 73 has arranged thereon an FC cooling water circulating pump P7, and further, the FC cooling water circulation circuit 73 has arranged thereon an ion resin 81 for removing unnecessary ion and is connected to a reservoir tank 83 for replenishing cooling water.

The first heat exchanger 74 is arranged on the FC cooling water circulation circuit 73. Thus, the FC cooling water flows through the fuel cell 10, rises in temperature as a result of collecting the heat generated in the fuel cell 10, goes down in temperature as a result that the heat is collected by the reserved hot water at the first heat exchanger 74, and again flows through the fuel cell 10.

A condensing refrigerant circulating pump P5 is arranged on the condensing refrigerant circulation circuit 75. The condensing refrigerant circulating pump P5 is for circulating condensing refrigerant being a waste heat collecting heat medium in the direction of the arrow. Further, the second heat exchanger 76 is arranged on the condensing refrigerant circulation circuit 75. In addition, on the condensing refrigerant circulation circuit 75, the condensing refrigerant circulating pump P5, the anode offgas condenser 32, the combustion gas condenser 34, the cathode offgas condenser 33 and the reformed gas condenser 31 are arranged in order in a direction heading from the second heat exchanger 76 toward the lower stream.

Further, the fuel cell system is provided with an inverter (electric power converter) 45. The inverter 45 is for converting the generated power output from the fuel cell 10 into alternating-current power and for supplying the same to an electric power consumption site 47 being an end user through a power transmission cable 46. At the electric power consumption site 47, there are installed load devices (not shown) being electric appliances such as lights, iron, TVs, washer, low table with electric heater, electric carpets, air conditioners, refrigerator and so on, and the alternating-current power supplied from the inverter 45 is supplied to the load devices on an on-demand basis. A system power source 48 of an electric power company is also connected to the power transmission cable 46 connecting the inverter 45 to the electric power consumption site 47, and when the total consumption of electric power by the load devices exceeds the generated electric power output of the fuel cell 10, the deficiency of electric power is supplemented by being received from the system power source 48. A wattmeter 47a is a user load power detection means for detecting a user load electric power (user-consumed electric power) and detects a total consumed electric power by all of the load devices used at the electric power consumption site 47, to transmits the detected electric power to a controller (not shown).

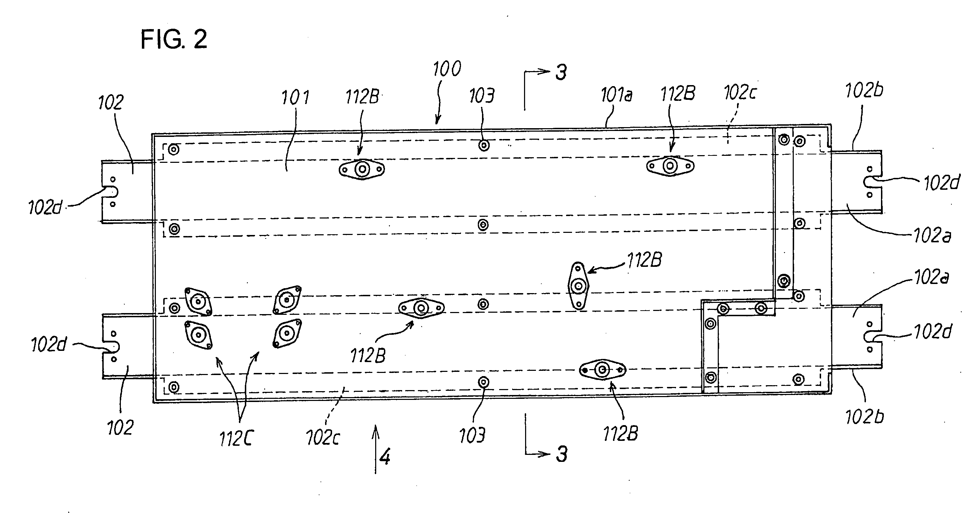

Figure 2 shows a base section 100 of the fuel cell system, and the base section 100 is composed of a base panel 101 taking a generally rectangular shape and a plurality (two) of support rails 102 secured to a lower surface of the base panel 101.

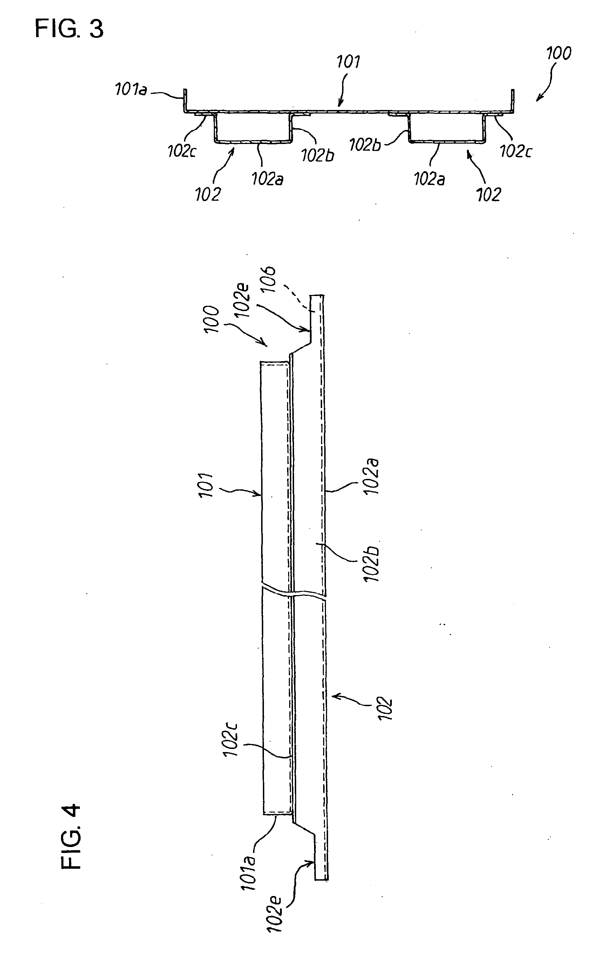

The support rails 102 extend roughly in parallel in the lengthwise direction of the base panel 101 and are provided with a predetermined space therebetween in a direction perpendicular to the lengthwise direction. As shown in Figures 3 and 4, each support rail 102 has a bottom wall portion 102a and opposite side wall portions 102b bent upward at a right angle or almost at a right angle from oppose end portions in the width direction of the bottom wall portion 102a, and horizontal attaching surfaces 102c which are bent at a right angle or almost at a right angle at the opposite sides in the width direction are formed at upper ends of the opposite side wall portions 102b except for opposite end portions 102e (refer to Figure 4) in the lengthwise direction of the support rail 102.

The base panel 101 is secured by means of bolts 103 on the horizontal attaching surfaces 102c of the support rails 102. The overall length of the support rails 102 are set to be longer by a predetermined length than the length in the lengthwise direction of the base panel 101, and the opposite end portions 102e in the lengthwise direction of the support rails 102 secured to the base panel 101 respectively protrude from the opposite end portions of the base panel 101. An edge portion 101 a bent upward is formed at the circumference of the base panel 101.

U-shaped cutouts 102d each for enabling an anchor bolt to pass therethrough are formed at the opposite end portions 102e in the lengthwise direction of the support rails 102. The support rails 102 are mounted at the bottom wall portions 102a thereof on an installation portion (not shown) which is constituted by, e.g., a concrete foundation for installing the fuel cell system thereon, and are fixed on the installation portion by anchor bolts embedded in the installation portion.

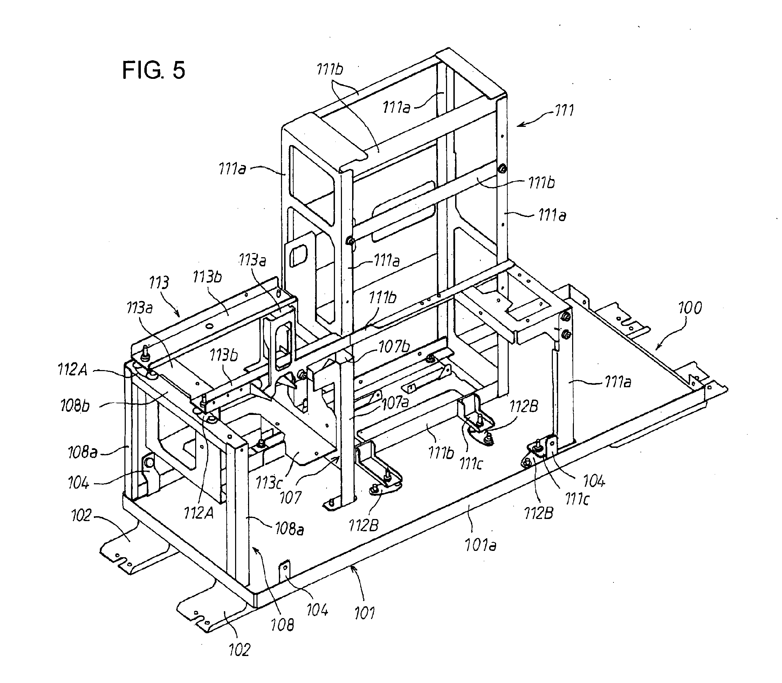

As shown in Figure 5, on the base panel 101, a pair of support brackets 107, 108 each taking a U-shape are secured at one end in the lengthwise direction of the base panel 101 almost in parallel with a predetermined space therebetween in the lengthwise direction. Regarding the widths of these support brackets 107, 108 in the direction perpendicular to the lengthwise direction, the support bracket 107 on the right side as viewed in Figure 5 (on the side closer to the center) is made narrower than the support bracket 108 on the left side, so that a space for installing the inverter 45 or the like can be obtained. Each support bracket 107, 108 is provided with two support frames 107a, 108a which are secured on the base panel 101 to extend vertically with a space in the direction perpendicular to the lengthwise direction of the base panel 101, and is constructed by bodily joining upper ends of these support frames 107a, 108a with horizontal cross beams 107b, 108b.

On the cross beams 107b, 108b of the support brackets 107, 108 secured on the base panel 101, a reforming apparatus support frame 113 as support member is supported through vibration-proofing members 112A each composed of a vibration-proofing mount and the like with a vibration-proofing rubber. The reforming apparatus support frame 113 has attached thereto at least the aforementioned reforming apparatus 20 and accessories related thereto and is made as a unit. By providing the reforming apparatus support frame 113 on the support sections (support brackets) 107, 108, provided on the base panel 101, through the vibration-proofing members 112A, it is possible to lower the gravity center position of the reforming apparatus 20 relative to the vibration-proofing members 112A even if the mounting position of the reforming apparatus 20 being heavy in weight becomes high.

Further, on the base panel 101, a stack support frame 111 as support member is supported at the center portion in the lengthwise direction of the base panel 101 through vibration-proofing members 112B each with a vibration-proofing rubber. The stack support frame 111 has attached thereto at least the aforementioned fuel cell (stack) 10 and accessories related thereto and is made as a unit.

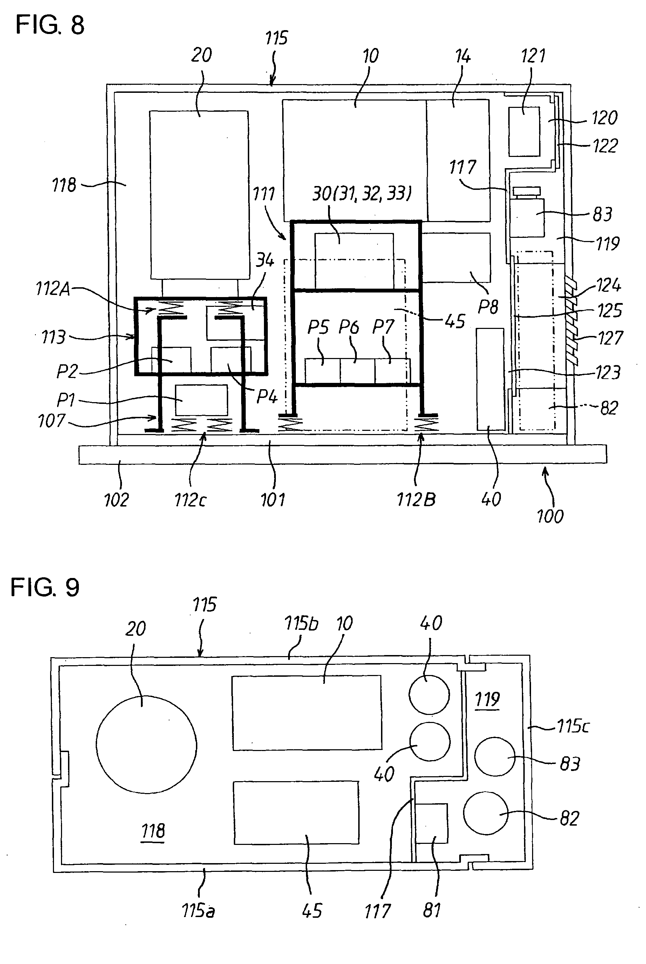

Further, as shown in Figures 8 and 9, on the base panel 101, the aforementioned inverter 45 is screw-fixed on the front side of the stack support frame 111. The inverter 45 has a function of converting the direct-current voltage outputted from the fuel cell 10 into predetermined alternating-current voltage to output the same to a power line connected to the system power source 48 and another function of converting the alternating-current voltage from the power line into predetermined direct-current voltage to output the same to internal loads thereof.

In the following description, for convenience in description, the surface or near side in Figure 5 is called a front part of the fuel cell system, the opposite side is called a back part, the left side in Figure 5 is called a left side part of the fuel cell system, and the opposite side is called a right side part.

As shown in Figure 5, the stack support frame 111 is constituted by a framework structure which is provided with a plurality of vertically extending support pillars 111 a, a plurality of cross beams 111 b reinforcing these support pillars 111a by mutually joining the same, and the like. As shown in Figure 8, the fuel cell including the humidifier 14 is attached on an upper stage of the framework structure, the condenser 30 (31, 32, 33) is attached on a middle stage of the framework structure, and the aforementioned condensing refrigerant circulating pump P5, the reserved hot water circulating pump P6 and the FC cooling water circulating pump P7 are attached on a lower stage of the framework structure. The cathode air supply pump P8 is attached to a side surface of the framework structure.

The reforming apparatus support frame 113 is provided with a pair of support frames 113a which are supported on the cross beams 107b, 108b of the pair of support brackets 107, 108 through the vibration-proofing members 112A each with the vibration-proofing rubber almost in parallel to the cross beams 107b, 108b, a pair of connection frames 113b mutually connecting opposite end portions of these support frames 113a, and a U-shaped support portion 113c hanging down from these connection frames 113a. The pair of support frames 113a and the support portion 113c are bodily formed by folding a piece of plate and are formed by cutting out parts thereof and providing openings thereon for reduction of weight as well as for easiness in mounting. As shown in Figure 8, the reforming apparatus 20 is attached on an upper stage of the reforming apparatus support frame 113, the combustion air pump P2 and the CO oxidizing air pump P4 are attached on the U-shaped support portion 113c, and the condenser 34 is attached to a side surface of the support portion 113c. Further, under the reforming apparatus support frame 113, the fuel pump (gas pump) P1 is arranged between the pair of support brackets 107, and the fuel pump P1 is installed on the base panel 101 through vibration-proofing members 112C (refer to Figure 2) each with a vibration-proofing rubber.

As described above, in the present embodiment, because of the structure not having frames which would otherwise be provided at the four corners on the base panel 101, by detaching the outer panel referred to later and by removing the inverter 45, the various devices, which are supported by the stack support frame 111 and the reforming apparatus support frame 113, and the fuel pump P1 can easily be inspected and replaced from the front side (from a front panel portion 115a side) of the fuel cell system without being obstructed by the cross beams, the frame bodies and the like of the stack support frame 111 and the reforming apparatus support frame 113.

Since the interior of the fuel cell system becomes low in temperature at the lower part and high in temperature at the upper part, the devices attached to the stack support frame 111 and the reforming apparatus support frame 113 are arranged so that the devices being low in temperature durability, such as, for example, the fuel pump P1, the respective air pumps P2, P4, P8 and the respective water pumps P5, P6, P7 are arranged at the lower part in the receiving compartment, whereas the devices being high in temperature durability, such as, for example, the reforming apparatus 20 or the like are arranged at the upper part of the receiving compartment.

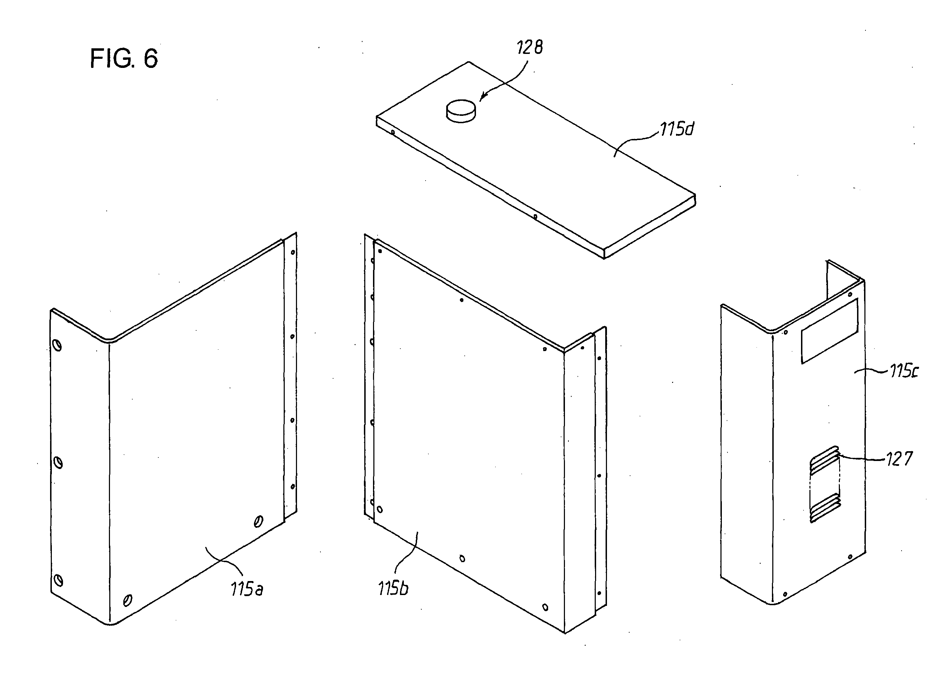

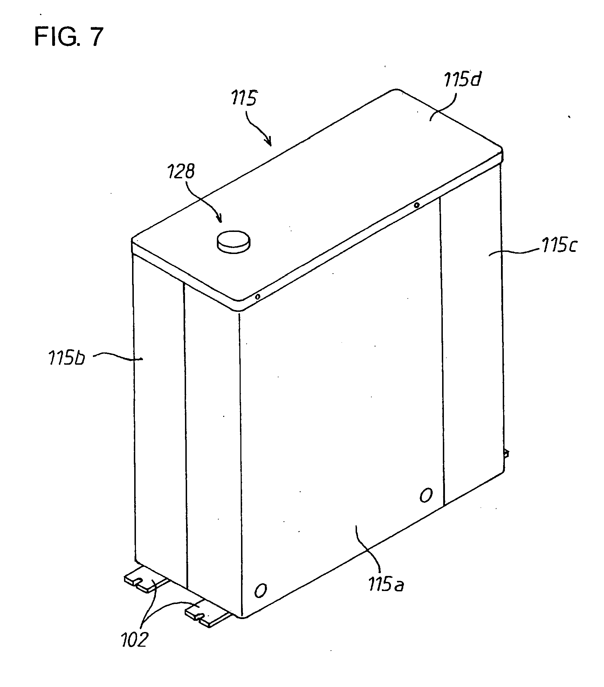

The outer panel 115 which covers the stack support frame 111, the reforming apparatus support frame 113, the inverter 45 and the like is detachably attached on the base panel 101. As shown in Figures 6, 7 and 9, the outer panel 115 is composed of the front panel portion 115a mainly covering the front part of the fuel cell system, a back panel portion 115b covering the back part, a side panel portion 115c covering the right side part, and a ceiling panel portion 115d covering the ceiling part.

As shown in Figure 9, the front panel portion 115a takes an L-shape as viewed in the plan view and covers the front part and a part of the left side part of the fuel cell system. The back panel portion 115b takes an L-shape as viewed in the plan view, covers the back part and a part of the left side part of the fuel cell system and overlaps the front panel portion 115a at the left side part. The side panel portion 115c closes an opening at the right side part between the front panel portion 115a and the back panel portion 115b and takes a U-shape as viewed in the plan view. The side panel portion 115c constitutes a panel for maintenance which is detached in maintaining the maintenance-requiring parts received in a maintenance-requiring parts receiving compartment referred to later. The ceiling panel portion 115d covers a ceiling part of the space whose circumference is surrounded by the front panel portion 115a, the back panel portion 115b and the side panel portion 115c.

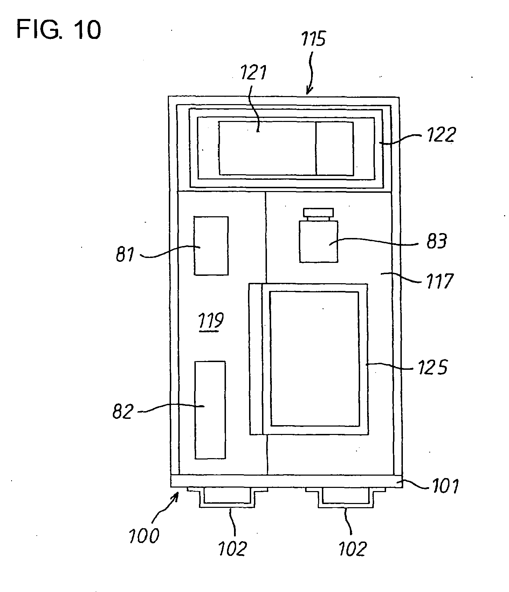

As shown in Figures 8, 9 and 10, on the base panel 101, the partition wall 117 is secured with a predetermined space at the right side part of the fuel cell system to extend over the front side and the back side of the fuel cell system, and the partition wall 117 partitions the interior of the outer panel 115 into a support frame receiving compartment (support member receiving compartment) 118 for receiving the unitized support frames 111, 113 and the like and a maintenance-requiring parts receiving compartment 119 for receiving the maintenance-requiring parts of which maintenance is required at relatively short intervals.

The front panel portion 115a of the outer panel 115 is detachably secured at the lower part thereof to a plurality of attaching seats 104 (refer to Figure 5), secured to the edge portion 101 a of the base panel 101, by means of bolts or the like and is secured at one end part thereof to a front side of the partition wall 117 referred to later, by means of bolts or the like. The back panel portion 115b is detachably secured at the lower part thereof to another plurality of attaching seats 104, secured to the base panel 101, by means of bolts or the like and is secured at one end part thereof to a back side of the partition wall 117 by means of bolts or the like. In the state, the overlapping parts of the front panel portion 115a and the back panel portion 115b are connected with each other by means of bolts or the like. Further, the side panel portion 115c is secured to the partition wall 117 by means of bolts or the like to close the opening at the right side parts of the front panel portion 115a and the back panel portion 115b. In addition, the ceiling panel portion 115d has the circumference thereof bent downward to form an edge portion 126, and the edge wall 126 is externally fitted on the front panel portion 115a, the back panel portion 115b and the side panel portion 115c and is secured to the front panel portion 115a, the back panel portion 115b and the side panel portion 115c by means of bolts or the like. Figure 6 shows the external appearance of the fuel cell system with the outer panel 115 attached thereto.

As shown in Figure 8, an upper part of the partition wall 117 is bent toward the right side surface of the fuel cell system and constitutes an observation window 120 opening to the support frame receiving compartment 118. In the inside of the observation window 120, there is provided a breaker box 121 with a control board for maintenance, and the observation window 120 is closed by a detachable cap member 122 with a conventional transparent plate. By removing the cap member 122, it is possible to maintain the breaker box 121 through the observation window 120.

The ion exchanger 81, the desulfurizer 82, the reservoir tank 83 and the like as the maintenance-requiring parts are attached in the maintenance-requiring parts receiving compartment 119. Further, on the support frame receiving compartment 118 side, the water refiners 40 are mounted on the base panel 101 to be adjacent to the partition wall 117. A water refiner take-out window 123 is formed on the partition wall 117, and the take-out window 123 is closed by a detachable cap member 125 which has an air filter 124 attached thereto. By removing the cap member 125, it is possible to maintain the water refiners 40 through the water refiner take-out window 123.

On the side panel portion 115c of the outer panel 115, the observation window is provided for making it possible to visually inspect the breaker box 121 from outside. Further, on the side panel portion 115c, an opening 127 with hoods for introducing the outside air is formed at a position corresponding to the air filter 124 received in the maintenance-requiring parts receiving compartment 119. The outside air (air) is introduced from the opening 127 into the fuel cell system through the air filter 124, and the introduced air is supplied to the fuel cell 10 and the interior of the inverter 45 through ducts (not shown). The air supplied into the inverter 45 is fed by the combustion air pump P2 to the burner 21, and the combustion exhaust gas is discharged outside from an exhaust port 128, formed at an upper part of the outer panel 115, by way of the combustion gas condenser 34.

The fuel cell system of the construction as described above is installed with the lengthwise direction of the base panel 101 extending along a wall of a house. At this time, the back panel portion 115b faces the wall side of the house, and the space between the back panel portion 115b and the wall is narrow. It may be the case that the space between the wall of the house and the site boundary for the house is also narrow.

In assembling the fuel cell system, first of all, the stack support frame 111 supporting the fuel cell 10 is installed on the base panel 101 through the vibration-proofing members 112B. Then, the fuel pump P1 is installed on the base panel 101 through the vibration-proofing members 112C, and the reforming apparatus support frame 113 supporting the reforming apparatus 20 is installed on the support brackets 107 secured to the base panel 101, through the vibration-proofing members 112A. Subsequently, the maintenance-requiring parts are attached to the outer side of the partition wall 117, and finally, the inverter 45 is secured on the base panel 101 by means of screws.

In maintaining the maintenance-requiring parts in the fuel cell system, the maintenance-requiring parts receiving compartment 119 is exposed outside only by detaching the side panel portion (panel for maintenance) 115c of the outer panel 115, so that it is possible to easily inspect or replace the maintenance-requiring parts such as the ion exchanger 81, the desulfurizer 82, the reservoir tank 83 and so on.

Further, in inspecting the devices received in the support frame receiving compartment 118 of the fuel cell system, it is possible by detaching the front panel portion 115a of the outer panel 115 and, if need be, by removing the inverter 45 that the various devices, which are respectively supported by the stack support frame 111 and the reforming apparatus support frame 113, and the fuel pump P1 can easily be approached without being obstructed by the cross beams, the frame bodies and the like on the base panel 101.

In the foregoing embodiment, since the support frames 81, 83 are made as units, it is possible to easily perform the assembling works of the fuel cell system, and the outer panel 115 can be detachably secured to the attaching seats 104 provided on the base panel 101 as well as to the partition wall 117. Accordingly, it is possible to disuse frames which would otherwise be required on the base panel 101 for securing the outer panel 115, and by detaching the outer panel 115, it becomes possible to easily reach the various devices received in the support frame receiving compartment 118 and the maintenance-requiring parts receiving compartment 119, so that it becomes possible to easily inspect and replace these devices.

Although in the foregoing embodiment, the stack support frame 111 for attaching the fuel cell 10 and the reforming apparatus support frame 113 for attaching the reforming apparatus 20 are configured as units and these two frames 111, 113 are installed on the base panel 101, the number of the frames to be configured as units and the way of dividing the units should not be limited to those described in the foregoing embodiment.

As the construction in Claim 1 for detachably securing the outer panel 115 to the base section 100, another construction that catches the outer panel 115 on, or partly inserts the same into, a frame portion of the base panel 101 may be taken besides that described in the foregoing embodiment.

As the attaching seats 104 in Claim 2 provided on the base section 100 for securing the outer panel 115, another construction that provides grooves at the frame portion of the base panel 101 to secure the outer panel 115 by inserting the same in the grooves may be taken besides that described in the foregoing embodiment.

Although having been described based on the embodiment as mentioned hereinabove, the prevent invention is not limited to the specific constructions described in the embodiment and may be practiced in various forms without departing from the gist of the present invention.

### INDUSTRIAL APPLICABILITY:

A fuel cell system according to the present invention is suitable for use as a home use fuel cell system in which a plurality of devices are received in the interior of an outer panel secured on a base section installed and fixed on an installation surface.

### DESCRIPTION OF REFERENCE SYMBOLS:

10...fuel cell, 20...reforming apparatus, 45...inverter, 100...base section, 101...base panel, 102...support rails, 104...attaching seats, 111, 113...support members (stack support frame, reforming apparatus support frame), 115... outer panel, 115a...front panel portion, 115b... back panel portion, 115c... side panel portion, 115d...ceiling panel portion, 117... partition wall, 118... support member receiving compartment (support frame receiving compartment), 119... maintenance-requiring parts receiving compartment.

## Claims

1. A fuel cell system **characterized by** comprising a base section fixed on an installation surface, a support member attaching a plurality of devices thereto and installed on the base section, a partition wall attached on the base section and partitioning the space over the base section, and an outer panel detachably secured to the partition wall and the base section.

2. The fuel cell system as set forth in Claim 1, wherein attaching seats for securing a lower part of the outer panel is provided on the base section.

3. The fuel cell system as set forth in Claim 1 or 2, wherein the partition wall partitions the interior of the fuel cell system into a support member receiving compartment for receiving the support member and a maintenance-requiring parts receiving compartment for receiving maintenance-requiring parts and wherein the outer panel comprises a front panel portion covering a front part of the fuel cell system, a back panel portion covering a back part, a side panel portion covering the maintenance-requiring parts receiving compartment, and a ceiling panel portion covering a ceiling part.
